# EUROPÄISCHE PATENTANMELDUNG

(11) **EP 4 516 502 A1**
(43) Veröffentlichungstag der Anmeldung: **05.03.2025**
(21) Anmeldenummer: 24196863.5
(22) Anmeldetag: 28.08.2024
(51) Int. Cl.: B32B 27/08, A47B 95/04, B27D 5/00, B27N 7/00, B32B 27/18, B32B 27/20

(54) **PROFILANORDNUNG**

(30) Priorität: 04.09.2023 DE 202023105050 U
(71) Anmelder: REHAU Industries SE & Co. KG, 95111 Rehau (DE)
(72) Erfinder: Affeldt, Jens-Uwe, 95111 Rehau (DE); Krämer, Uwe, 95111 Rehau (DE); Sell, Stephan, 39126 Magdeburg (DE); Weikl, Jessica, 95448 Bayreuth (DE)

(57) **Zusammenfassung**

Die Erfindung betrifft eine Profilanordnung, insbesondere Kantenleiste, mit wenigstens einem Leistenkern aus wenigstens einem halogenfreien, polymeren Material, wobei der Leistenkern eine Vorderseite, sowie eine dieser gegenüberliegend angeordnete, Rückseite aufweist, wobei das halogenfreie, polymere Material des Leistenkernes 2 wenigstens 15 bis 80 Gew.-%, bevorzugt 20 bis 75 Gew.-%, besonders bevorzugt 25 bis 70 Gew.-%, bezogen auf das Gesamtgewicht, cellulosische Fasern und/oder Zellstoff aufweist, mit einer durchschnittlichen Partikellänge von etwa 5 bis 1.500 µm, bevorzugt 7 bis 1.000 µm, besonders bevorzugt 5 bis 500 µm nach ISO 13320:2020-01, dass die cellulosischen Fasern und/oder der Zellstoff im halogenfreien, polymeren Material des Leistenkerns 2 deligniert sind/ist,

## Beschreibung

Die Erfindung betrifft eine Profilanordnung, insbesondere Kantenleiste, mit wenigstens einem Leistenkern aus wenigstens einem halogenfreien, polymeren Material, wobei der Leistenkern eine Vorderseite, sowie eine dieser gegenüberliegend angeordnete, Rückseite aufweist, weiterhin betrifft die Erfindung das technische Gebiet von Gegenständen wie Möbelplatten und dergleichen mit wenigstens einer solchen Profilanordnung.

Derartige Profilanordnungen dienen bisher vorzugsweise der Dekoration von Schmalseiten/ Seitenkanten von Gegenständen wie Möbelplatten oder Holzwerkstoffplatten, Spanplatten, aber auch zunehmend von Türen, Wänden, Decken, Böden, Treppengeländern, Handläufen und dergleichen. Hierzu werden die Profilanordnungen bspw. auf die zu dekorierenden Schmalseiten/ Seitenkanten der Gegenstände fixiert. Durch eine spezielle Materialauswahl können besagte Profilanordnungen so angepasst werden, dass eine gewünschte Optik bezüglich bspw. der entsprechenden Möbelteilkante erzielbar ist.

So ist in der DE 102008038008 B4 eine Profilanordnung offenbart mit einem mehrschichtigen Aufbau, wobei die Profilanordnung eine Dekorschicht sowie eine unmittelbar benachbart angeordnete Trägerschicht aufweist, welche im Koextrusionsverfahren hergestellt sind, wobei die Dekorschicht organische Fasern aufweist, wobei die organischen Fasern ein zerkleinertes Ledermaterial sind und wobei der Anteil des zerkleinerten Ledermaterials in der Dekorschicht zwischen 30 und 70 Gew.-% beträgt, wobei der thermoplastisch verarbeitbare Kunststoff der Dekorschicht ein Polyolefin oder Acrylnitril-Butadien-Styrol ist. Die Profilanordnung ist weiter so ausgebildet, dass die Trägerschicht aus einem thermoplastisch verarbeitbaren Kunststoff, vorzugsweise aus einem Polyolefin oder aus Acrylnitril-Butadien-Styrol (ABS) oder aus Polymethylmethacrylat (PMMA) oder aus Polyethylenterephthalat (PET) oder aus Polyvinylchloriden (PVC) oder aus Polycarbonaten (PC) besteht oder aus Mischungen dieser.

Allerdings kann der, mit den bisherigen Profilanordnungen erzielbare, optische Eindruck nicht immer die ständig steigenden Anforderungen an die Optik moderner Gegenstände wie bspw. Möbelstücke befriedigen, insbesondere dann, wenn neue Funktionen / Designs / Oberflächen für die Profilanordnungen erwünscht sind.

Es war daher erforderlich, die bisher eingesetzten Materialien so zu optimieren / zu verändern, dass neue Funktionalitäten / Designs / Oberflächen realisierbar sind.

Der Erfindung liegt daher die Aufgabe zugrunde, die Nachteile des Standes der Technik zu überwinden und Profilanordnungen bereitzustellen, welche es einerseits ermöglichen, einen hochwertigen optischen Eindruck zu erzielen und die bisherigen Funktionen aus dem Stand der Technik beibehalten, sowie andererseits neue Funktionalitäten beinhalten, halogenfrei und dabei auch noch wirtschaftlich und kostengünstig herstellbar sind.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass eine Profilanordnung, insbesondere Kantenleiste, mit wenigstens einem Leistenkern aus wenigstens einem halogenfreien, polymeren Material, wobei der Leistenkern eine Vorderseite, sowie eine dieser gegenüberliegend angeordnete, Rückseite aufweist, wobei
∘ das halogenfreie, polymere Material des Leistenkernes 2 wenigstens 15 bis 80 Gew.-%, bevorzugt 20 bis 75 Gew.-%, besonders bevorzugt 25 bis 70 Gew.-%, bezogen auf das Gesamtgewicht, cellulosische Fasern und/oder Zellstoff aufweist,
o mit einer durchschnittlichen Partikellänge von etwa 5 bis 1.500 µm, bevorzugt 7 bis 1.000 µm, besonders bevorzugt 5 bis 500 µm nach ISO 13320:2020-01,
∘ dass die cellulosischen Fasern und/oder der Zellstoff im halogenfreien, polymeren Material des Leistenkerns 2 deligniert sind/ist,
diese Aufgabe löst. Hierdurch ist vorteilhafterweise erreichbar, dass eine Profilanordnung zur Verfügung stellbar ist, die nicht nur die bisher bekannten funktionellen Wirkungen beispielsweise gegen Feuchte bzw. Temperaturen realisiert, sondern dass diese Profilanordnung in der Lage ist, bei ihrer bestimmungsgemäßen Verwendung einen visuell neuen, optisch wahrnehmbaren Struktureffekt aufweisen, der insbesondere bei einer an einer Möbelplatte angebrachten und an den Längsseiten angepassten/ abgefrästen Profilanordnung eine völlig neue Plattenoptik erzeugt. Ein optischer Übergang zwischen der Möbelplatte und der an der Stirnseite angebrachten Profilanordnung ist somit überraschenderweise nicht mehr erkennbar. Ein weiterer Vorteil der Profilanordnung ist, dass der Materialpreis als auch die Herstellungskosten auf einem sehr niedrigen Niveau ist, bei gleichzeitig besserer Verfügbarkeit der erforderlichen Rohstoffe, so dass diese Profilanordnung einen wesentlich niedrigeren "CO₂-Fußabdruck" aufweist als die Profilanordnungen im bekannten Stand der Technik. Weiterhin vorteilhaft bei der Profilanordnung ist, dass es überraschenderweise möglich ist, bei bestimmungsgemäßer Verwendung die Profilanordnung ohne eine zusätzliche Funktionsschicht insbesondere Haftvermittlerschicht an der Stirnseite der Gegenstände wie Möbelplatten, Möbelstücke, Türen, Spanplatten, Arbeitsplatten und dergleichen anzubringen bzw. zu fixieren. Die Profilanordnung ist somit sehr vielseitig anwendbar bzw. anbringbar an verschiedene Gegenstände wie Möbelplatten, Möbelstücke, Türen, Spanplatten, Arbeitsplatten und dergleichen und sind neben der Funktion des Schutzes einer Schmalseite/ Stirnseite einer beispielsweise Möbelplatte zusätzlich auch verbesserte optische bzw. designerische Aspekte realisierbar.

Deligniert im Sinne der Erfindung heißt, dass die cellulosischen Fasern und/oder der Zellstoff im polymeren Material des Leistenkerns kein Lignin aufweisen.

Es liegt jedoch auch noch im Rahmen der Erfindung, dass die cellulosischen Fasern und/oder der Zellstoff im halogenfreien, polymeren Material des Leistenkerns vorzugsweise maximal 5 Gew.-%, bevorzugt maximal 4 Gew.-%, besonders bevorzugt maximal 3,5 Gew.-%, bezogen auf das Gesamtgewicht, an Lignin aufweisen. Hierbei kann zur Bewertung / Bestimmung auch die Kappa- Zahl gemäß ISO 302:2015-08 verwendet werden.

Dieser Anteil an Restlignin hat überraschenderweise keinen bzw. nahezu keinen Einfluss auf die positiven Eigenschaften der Profilanordnung.

Vorteilhaft bei der Profilanordnung ist, das halogenfreie, polymere Material des Leistenkerns nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von wenigstens 3 (drei), bevorzugt wenigstens 3 (drei) bis 4 (vier) gemäß DIN EN 20105-A02:1994 aufweist. Hierdurch ist die Profilanordnung wirtschaftlich und kostengünstig herstellbar und ist hinsichtlich der Optik, der Haptik sowie der Struktureffekte optimal an Gegenstände wie Möbelplatten, Möbelstücke, Spanplatten, Türen, Arbeitsplatten und dergleichen anpassbar.

Ein weiterer Vorteil der Profilanordnung ist, dass die cellulosischen Fasern und/ oder der Zellstoff ein Längen- zu Dickenverhältnis von etwa 2 : 1 bis etwa 30:1 aufweisen. Auch durch diese vorteilhaften Merkmale sind Profilanordnungen zur Verfügung stellbar, die wirtschaftlich sowie kostengünstig herstellbar sind und die hinsichtlich ihrer optischen sowie designerischen Eigenschaften vielfältig gestaltbar sind.

Ebenso vorteilhaft bei der Profilanordnung ist, dass die cellulosischen Fasern und/oder der Zellstoff wenigstens eine Oberflächenbehandlung mit wenigstens einem Haftvermittlersystem aufweisen. Dadurch sind Profilanordnungen zur Verfügung stellbar, die nicht nur wirtschaftlich sowie kostengünstig herstellbar sind, sondern die auch nachhaltig sind und die eine Vielzahl von Möglichkeiten bieten, das Design, die Oberfläche bzw. die optischen Struktureffekte derartiger Profilanordnungen kreativ auszugestalten.

Dabei hat es sich weiterhin als vorteilhaft bei der Profilanordnung erwiesen, dass die cellulosischen Fasern und/oder der Zellstoff in räumlich gleichmäßiger, homogener und/ oder inhomogener Verteilung in dem halogenfreien, polymeren Material des Leistenkerns enthalten. Dies führt zu einem homogenen, flächigen sowie optisch ansprechenden Struktureffekt, der sich über den gesamten Querschnitt der Profilanordnung verteilt.

Es hat sich weiterhin als vorteilhaft herausgestellt bei der Profilanordnung, dass die Vorderseite des Leistenkerns wenigstens abschnittsweise eine Beschichtung aufweist. Weiterhin vorteilhaft bei der Profilanordnung ist, dass die Beschichtung an der Vorderseite des Leistenkerns eine Dicke von etwa 1 bis 350 µm, bevorzugt 2 bis 300 µm, besonders bevorzugt 5 bis 250 µm aufweist.

Ebenfalls vorteilhaft ist, dass die Beschichtung an der Vorderseite des Leistenkerns als koextrudierte oder postkoextrudierte Schicht oder als Farbauftrag oder als Druckschicht ausgebildet ist. Diese als Farbauftrag oder als Druckschicht ausgebildete Beschichtung lässt sich vorteilhafterweise realisieren insbesondere durch sogenannten Mehrfarbendruck, durch Digitaldruck, durch Tiefdruck dergleichen. In dieser vorteilhaften Ausgestaltung lässt sich durch den Werkstoff, die Dicke sowie die Form der Beschichtung die Intensität als auch die Haptik der Oberfläche der Profilanordnung weiter optimieren. Die Beschichtung kann vorteilhafterweise nachwachsende Rohstoffe von etwa 0,01 bis 100 %, vorzugsweise 20 bis 100 %, besonders bevorzugt von 40 bis 100 % aufweisen.

Dies alles führt zu einer wirtschaftlichen und kostengünstigen Herstellung der Profilanordnung sowie zu weiteren Optimierungsmöglichkeiten insbesondere für die Oberfläche bzw. die Optik der Profilanordnung.

Vorteilhaft bei der Profilanordnung ist außerdem, dass die Rückseite des Leistenkerns wenigstens abschnittsweise eine Funktionsschicht aufweist. Neben der wirtschaftlichen und kostengünstigen Herstellung der Profilanordnung ist es außerdem möglich, durch eine Variation der Funktionsschicht insbesondere die Fixierung der Profilanordnung an einem Gegenstand zu optimieren indem beispielsweise die Funktionsschicht als sogenannte Haftvermittlerschicht ausgebildet ist und/oder in dem die Funktionsschicht als sogenannte Schmelzkleberschicht ausgebildet ist und/oder in dem die Funktionsschicht als polymere Funktionsschicht ausgebildet ist.

Ein Vorteil der Profilanordnung liegt weiter darin, dass an der Vorderseite des Leistenkörpers wenigstens eine Deckschicht mit einer Dicke von etwa 2 bis 60 µm, vorzugsweise 5 bis 30 µm angeordnet ist. Dabei hat es sich weiter als vorteilhaft herausgestellt, dass die Deckschicht an der Vorderseite des Leistenkerns wenigstens eine Acrylpolymer umfasst, sowie über ihre Dicke für sichtbares Licht einen Transmissionsgrad von maximal 80 % gemessen nach DIN EN ISO 13468-2:2006-07 aufweist. Die Deckschicht kann dabei vorteilhafterweise nachwachsende Rohstoffe von etwa 0,01 bis 100 %, vorzugsweise 20 bis 100 %, besonders bevorzugt von 40 bis 100 % aufweisen.

Neben einer optisch ansprechenden Oberseite der Profilanordnung ist auch weiterhin ein mechanischer Schutz realisierbar, der jedoch die Optik insbesondere den optischen Struktureffekt der Profilanordnung nicht beeinflusst.

Ein weiterer Vorteil der Profilanordnung besteht darin, dass das halogenfreie, polymere Material des Leistenkerns eine Härte Shore D von wenigstens 40 gemäß DIN EN ISO 868:2003-10 aufweist. Hierdurch ist einerseits die wirtschaftliche sowie kostengünstige Herstellung gewährleistet und andererseits ist es möglich, das halogenfreie, polymere Material des Leistenkerns den jeweiligen Anforderungen an beispielsweise die Gegenstände bspw. die zu bekantenden Möbelstücke und dergleichen anzupassen.

Die Profilanordnung zeichnet sich weiterhin dadurch aus, dass das halogenfreie, polymere Material des Leistenkerns eine Zugfestigkeit von wenigstens 35 MPa, bevorzugt wenigstens 40 MPa nach DIN EN ISO 527:2019-12 aufweist.

Weiterhin vorteilhaft bei der Profilanordnung ist, dass das halogenfreie, polymere Material des Leistenkerns mit den cellulosischen Fasern und/oder dem Zellstoff auch nach mehrfachen Recyclingprozessen eine Zugfestigkeit von wenigstens 85 % nach DIN EN ISO 527:2019-12 des unrecycelten, halogenfreien, polymeren Materials aufweist.

In einer weiteren vorteilhaften Ausgestaltung der Profilanordnung hat sich gezeigt, dass die Rückseite des Leistenkerns der Profilanordnung einer Oberflächenbehandlung durch ein Coronaverfahren, Beflammungsverfahren, Plasmaverfahren, Silikatisierungsverfahren und dergleichen unterworfen wurde. Hierdurch kann ein optimierter Verbund der Profilanordnung für verschiedenste Werkstoffkombinationen realisiert werden.

In einer ebenfalls vorteilhaften Ausgestaltung der Profilanordnung hat sich herausgestellt, dass das halogenfreie, polymere Material des Leistenkerns und/oder das halogenfreie, polymere Material der Funktionsschicht licht- und/oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält. In dieser Ausgestaltung der Profilanordnung ist diese durch an sich bekannte Laserfügeverfahren optimal durch das gezielte Einbringen der Energie in das halogenfreie, polymere Material der Funktionsschicht beispielsweise an den Schmalseiten von Möbelstücken verschweißbar.

Es hat sich weiterhin vorteilhaft herausgestellt, dass das halogenfreie, polymere Material des Leistenkerns und/oder das halogenfreie, polymere Material der Funktionsschicht wenigstens einen, teilweise anorganische und/oder organische Pigmente enthaltenden, Zusatzstoff in einer Menge von etwa 0,01 bis 5,0 Gew.-%, bevorzugt 0,02 bis 3,0 Gew.-%, bezogen auf die Gesamtmenge, eingelagert enthält. Hierdurch ist es möglich, die Profilanordnung mit allen derzeit bekannten strahlungsaktivierbaren Verfahren bspw. an den Schmalseiten von Möbelstücken kostengünstig und wirtschaftlich anzubringen.

Ebenfalls vorteilhaft bei der Profilanordnung ist, dass der Werkstoff des Leistenkerns etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist insbesondere aus Silikaten, Karbonaten, Phosphaten, Sulfaten, Sulfiden und dergleichen. Weiter vorteilhaft ist der Füllstoff ausgewählt aus der Gruppe der Schichtsilikate, sowie Carbonate bzw. Sulfate von Barium sowie Kalzium, und dergleichen. In einer besonders vorteilhaften Ausführungsform der Profilanordnung umfasst der Füllstoff des Leistenkerns insbesondere Bariumsulfat, Kalziumsulfat, Kalziumcarbonat, Talkum, Wollastonit. Die Füllstoffe können dabei vorteilhafterweise nachwachsende Rohstoffe von etwa 0,01 bis 100 %, vorzugsweise 20 bis 100 %, besonders bevorzugt von 40 bis 100 % aufweisen.

Ein weiterer Vorteil der Profilanordnung ist, dass der Füllstoff im Werkstoff des Leistenkerns eine mittlere Partikelgröße mit einem D50- Wert von etwa 0,2 bis 25 µm, bevorzugt 0,5 bis 15 µm, besonders bevorzugt 1 bis 8 µm gemäß DIN 66165-1:2016-08 aufweist. Ebenfalls vorteilhaft bei der Profilanordnung ist, dass der Füllstoff im Werkstoff des Leistenkerns eine Partikelgröße mit einem D98- Wert von etwa 15 µm, bevorzugt kleiner 15 µm, besonders bevorzugt kleiner 10 µm gemäß DIN 66165-1:2016-08 aufweist.

Ein weiterer Vorteil der Profilanordnung besteht darin, dass der Leistenkern auf Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyphenylsulfon (PPSU); Polyaryletherketon (PAEK); Polyacrylnitril (PAN); Polyetherketon (PEK); Polyimid (PI); Polyisobuten (PIB); Polyphthalamid (PPA); Polypyrrol (PPY); Polyurethan (PUR); Polyvinylalkohol (PVA); Polyvinylacetat (PVAC) sowie Mischungen aus wenigstens zwei diesen Materialien basiert. Weiterhin ist die Profilanordnung vorteilhafterweise so ausgebildet, dass das halogenfreie, polymere Material des Leistenkerns und/oder das polymere Material der Funktionsschicht wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher. Die Additive können dabei vorteilhafterweise nachwachsende Rohstoffe von etwa 0,01 bis 100 %, vorzugsweise 20 bis 100 %, besonders bevorzugt von 40 bis 100 % aufweisen.

Somit ist eine Profilanordnung zur Verfügung stellbar, die einerseits wirtschaftlich und kostengünstig herstellbar ist, die aber auch die bisher aus dem Stand der Technik bekannten Funktionen wie Haftfestigkeitswerte bzw. Schälfestigkeitswerte sowie die Wasserbeständigkeit realisiert.

Die Profilanordnung zeichnet sich auch dadurch aus, dass der Kohlenstoff- Anteil des Leistenkerns wenigstens teilweise Isotopenanteile von 14 C/12 C von etwa 0,01 bis 100 %, vorzugsweise 20 bis 100 %, besonders bevorzugt 40 bis 100 % gemäß ASTM 6866-22 Methode B aufweist. Ebenfalls vorteilhaft bei der Profilanordnung ist, dass der Leistenkern einen Isotopenanteil 14 C von 0,01 % bis 100 %, vorzugsweise 20 % bis 100 %, besonders bevorzugt 40 bis 100 % aufweist. Die Erfindung hat erkannt, dass die Profilanordnung erst dann wirtschaftlich und kostengünstig herstellbar ist, einen hochwertigen optischen Eindruck erzielt und die bisherigen Funktionen aus dem Stand der Technik beibehält, wenn dem Leistenkern genau die aufgelisteten Isotopenanteile zugefügt sind.

Weiter vorteilhaft bei der Profilanordnung ist, dass das halogenfreie, polymere Material des Plattenkerns mit den cellulosischen Fasern und/oder dem Zellstoff nachwachsende Rohstoffe von etwa 0,01 bis 100 %, vorzugsweise 20 bis 100 %, besonders bevorzugt von 40 bis 100 % aufweist, nachgewiesen gemäß Massenbilanzierung bspw. über ISCC. Bspw. kann die Profilanordnung, das halogenfreie, polymere Material des Leistenkerns mit den cellulosischen Fasern und/oder dem Zellstoff, über Massenbilanzierung zertifizierte, nachwachsende Rohstoffe von etwa 60 % sowie etwa 40 % nichtnachwachsende, fossilbasierende Rohstoffe aufweisen.

Eine weitere bevorzugte Ausführung betrifft eine Profilanordnung nach einer der vorherigen Ausführungen, wobei die Funktionsschicht auf einem halogenfreien, polymeren Material, bevorzugt Polypropylen (PP), Acrylnitril-Butadien-Styrol-Copolymerisat (ABS), Polymethylmethacrylat (PMMA), Polyethylenterephthalat (PET), Polyethylen (PE), Styrol-Ethylen-Butadien-Styrol-Blockcopolymer (SEBS), Polyamid (PA),_Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. basiert.

Das halogenfreie, polymere Material kann dabei vorteilhafterweise nachwachsende Rohstoffe von etwa 0,01 bis 100 %, vorzugsweise 20 bis 100 %, besonders bevorzugt von 40 bis 100 % aufweisen. Diese Maßnahme hat den Vorteil, dass dieses Material kostengünstig verfügbar sowie gut verarbeitbar ist, und zudem einfach chemisch modifizierbar ist. In einer weiter bevorzugten Ausführungsform ist die Funktionsschicht als thermoplastische Funktionsschicht ausgebildet, die es ermöglicht, eine Profilanordnung nach den vorher beschriebenen Ausführungsformen klebstofffrei, d.h. ohne unmittelbar vor dem Anfügen zusätzlich einen sogenannten Schmelzkleber aufzubringen sowie ohne eine sichtbare Fuge an einer Schmalseite einer Leichtbauplatte zu fixieren.

Eine weitere bevorzugte Ausführung betrifft eine Profilanordnung nach wenigstens einer der vorangegangenen Ausführungen, wobei das halogenfreie, polymere Material der Funktionsschicht ein Copolymer, vorzugsweise ein Pfropfcopolymer, bevorzugt ein Maleinsäureanhydrid- gepfropftes Polypropylen (PP-MAH) ist. Diese Maßnahme hat den Vorteil, dass sich die Werkstoffzusammensetzung, insbesondere der Anteil polarer Gruppen im Molekülaufbau, und damit die Werkstoffeigenschaften gezielt einstellen lassen.

Es hat sich weiterhin als äußerst vorteilhaft herausgestellt, dass das halogenfreie, polymere Material der Funktionsschicht ausgewählt ist aus der Gruppe der Polyurethane (PUR), der Acrylate, der Epoxidharze, der Ethylenvinylacetate (beispielsweise EVA-Dispersionen), der Polyvinylacetate (PVAC-Dispersionen) und dergleichen, sowie Mischungen aus zwei oder mehreren der vorgenannten Stoffe.

Ein weiterer Vorteil der Profilanordnung ist, dass das halogenfreie, polymere Material der Funktionsschicht ein Haftvermittlersystem aufweist, vorzugsweise als wässriger Dispersionen bzw. Lösungen in organischen Lösemitteln von Bindemittelharzen, welche insbesondere aus der Gruppe von Polyurethanen, Polyestern, Acrylaten, Methylmethacrylaten, Epoxidharzen, Ethylenvinylacetaten, Polyvinylacetaten, Polyvinyliden, Naturkautschuk, sowie Mischungen aus zwei oder mehreren der vorgenannten Bindemittelgruppen, ausgewählt sind. Verwendet mit oder ohne Zusatz von Vernetzer- / Aktivator-Komponenten, z.B. auf Basis von Polyisocyanaten, Aminen oder Peroxiden. Das halogenfreie, polymere Material der Funktionsschicht ist dabei bei der direkten Herstellung der Profilanordnung auf die Rückseite des Leistenkerns aufbringbar.

Es hat sich weiterhin als vorteilhaft herausgestellt, dass die Funktionsschicht der Profilanordnung eine Dicke von etwa 0,1 µm bis 100 µm, vorzugsweise 0,2 µm bis 75 µm, besonders bevorzugt 0,5 bis 30 µm aufweist. Dies führt vorteilhafterweise neben einer wirtschaftlichen und kostengünstigen Herstellung der Profilanordnung dazu, dass die Funktionsschicht der jeweiligen Geometrie der Profilanordnung optimal anpassbar ist.

Die Aufgabe der Erfindung, einen Gegenstand aufzuzeigen, wird durch einen Gegenstand wie Möbelplatte, Möbelstück, Tür, Spanplatte, Arbeitsplatte und dergleichen mit wenigstens einer Profilanordnung, welche die vorteilhaften Ausführungsformen der vorherigen Abschnitte aufweist, gelöst.

Der Gegenstand wie Möbelplatte, Möbelstück, Spanplatte, Tür, Arbeitsplatte und dergleichen ist weiter vorteilhafterweise so ausgebildet, dass die Profilanordnung mit einer der Vorderseite abgewandten Rückseite an dem Gegenstand angeordnet ist.

Der Gegenstand wie Möbelplatte, Möbelstück, Spanplatte, Tür, Arbeitsplatte und dergleichen zeichnet sich weiterhin dadurch aus, dass die Profilanordnung eine Schälfestigkeit von wenigstens 40 N/cm nach DIN 53539:1979-09, gemessen an Spanplatten, aufweist.

Die Profilanordnung soll nun an diesen, nicht einschränkenden, Ausführungsbeispielen näher beschrieben werden.

Es zeigen:
- Fig. 1:: perspektivische Darstellung einer Profilanordnung 1;
- Fig. 2:: perspektivische Darstellung einer weiteren Profilanordnung 1;
- Fig. 3:: perspektivische Darstellung eines Gegenstandes, wie Möbelplatte 10 mit wenigstens einer weiteren Profilanordnung 1.

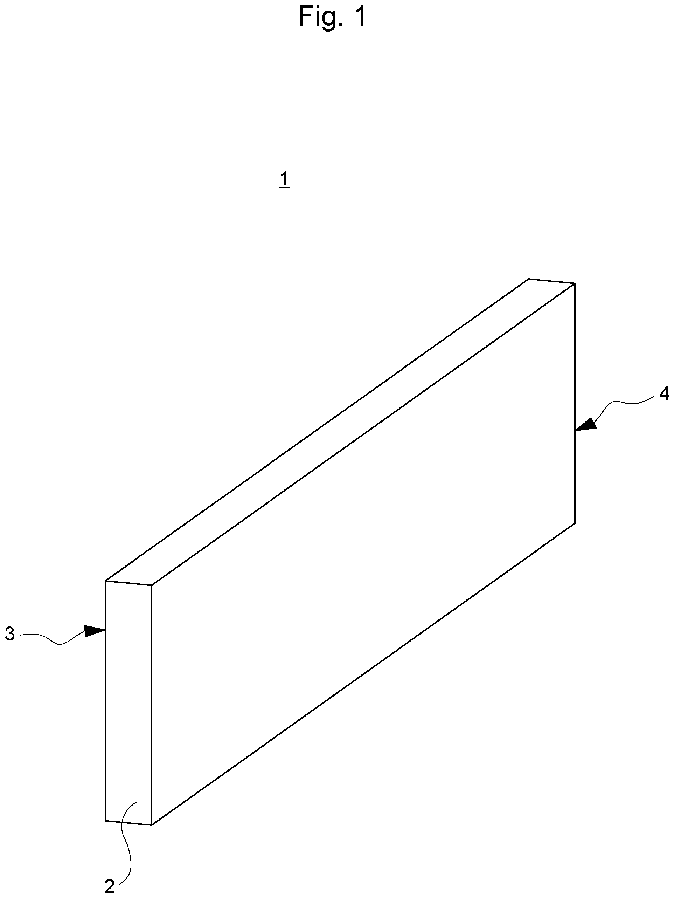

In der **Figur** 1 ist eine perspektivische Darstellung einer Profilanordnung 1 dargestellt.

Die Profilanordnung 1, insbesondere Kantenleiste, mit wenigstens einem Leistenkern 2 aus wenigstens einem halogenfreien, polymeren Material, wobei der Leistenkern 2 eine Vorderseite 3, sowie eine dieser gegenüberliegend angeordnete, Rückseite 4 aufweist, wobei
∘ das halogenfreie, polymere Material des Leistenkernes 2 wenigstens 15 bis 80 Gew.-%, bevorzugt 20 bis 75 Gew.-%, besonders bevorzugt 25 bis 70 Gew.-%, bezogen auf das Gesamtgewicht, cellulosische Fasern und/oder Zellstoff aufweist,
o mit einer durchschnittlichen Partikellänge von etwa 5 bis 1.500 µm, bevorzugt 7 bis 1.000 µm, besonders bevorzugt 150 bis 500 µm nach ISO 13320:2020-01,
dass die cellulosischen Fasern und/oder der Zellstoff im halogenfreien, polymeren Material des Leistenkerns 2 deligniert sind/ist.

Weiter ist die Profilanordnung 1 so ausgebildet, dass die cellulosischen Fasern und/oder der Zellstoff im polymeren Material des Leistenkerns 2 maximal 4 Gew.-%, bevorzugt maximal 4 Gew.-%, besonders bevorzugt maximal 3,5 Gew.-%, bezogen auf das Gesamtgewicht, an Lignin aufweisen. In diesem Ausführungsbeispiel ist die Profilanordnung 1 so ausgebildet, dass die cellulosischen Fasern und/oder der Zellstoff im polymeren Material des Leistenkerns 0 Gew.-%, bezogen auf das Gesamtgewicht, an Lignin aufweisen.

In diesem Ausführungsbeispiel weist das halogenfreie, polymere Material des Leistenkerns 2 etwa 50 Gew.-%, bezogen auf das Gesamtgewicht, cellulosische Fasern auf, mit einer durchschnittlichen Partikelgröße von etwa 500 µm nach ISO 13320:2020-0 auf.

Die Profilanordnung 1 ist weiter so ausgebildet, dass das halogenfreie, polymere Material des Leistenkernes 2 nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von wenigstens 3 (drei), bevorzugt wenigstens 3 (drei) bis 4 (vier) gemäß DIN EN 20105-A02:1994 aufweist.

Das halogenfreie, polymere Material des Leistenkernes 2 weist nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von etwa 3,2 gemäß DIN EN 20105-A02:1994 auf.

Die Profilanordnung 1 ist weiterhin so ausgebildet, dass das halogenfreie, polymere Material des Leistenkernes 2 CIELAB- Farbabstände von wenigstens 3 (drei), bevorzugt wenigstens 3,4 gemäß DIN EN 20105-A02:1994 aufweist. In diesem Ausführungsbeispiel ist die Profianordnung so ausgebildet, dass das halogenfreie, polymere Material des Leistenkernes 2 CIELAB- Farbabstände von etwa 3,2 gemäß DIN EN 20105-A02:1994 aufweist.

Weiterhin sind die cellulosische Fasern im Leistenkern 2 der Profilanordnung 1 in räumlich gleichmäßiger Verteilung enthalten, um so eine gleichmäßige optisch ansprechende Oberfläche der Profilanordnung 1 zu realisieren.

Die Profilanordnung 1 zeichnet sich auch dadurch aus, dass der Kohlenstoff- Anteil des Leistenkerns 2 wenigstens teilweise Isotopenanteile von 14 C/12 C von etwa 0,01 bis 100 %, vorzugsweise 20 bis 100 %, besonders bevorzugt von 40 bis 100 % gemäß ASTM 6866-22 Methode B aufweist. In diesem Ausführungsbeispiel weist der Kohlenstoff- Anteil des Leistenkerns 2 wenigstens teilweise Isotopenanteile von 14 C/12 C von etwa 50 % gemäß ASTM 6866-22 Methode B auf.

Weiter vorteilhaft bei der Profilanordnung 1 ist, dass das halogenfreie, polymere Material des Leistenkerns 2 mit den cellulosischen Fasern und/oder dem Zellstoff nachwachsende Rohstoffe von etwa 0,01 bis 100 %, vorzugsweise 20 bis 100 %, besonders bevorzugt von 40 bis 100 % aufweist, nachgewiesen gemäß Massenbilanzierung bspw. über ISCC. Bspw. kann die Profilanordnung 1, das halogenfreie, polymere Material des Leistenkerns mit den cellulosischen Fasern und/oder dem Zellstoff, über Massenbilanzierung zertifizierte, nachwachsende Rohstoffe von etwa 55 % sowie etwa 45 % nichtnachwachsende, fossil basierende Rohstoffe aufweist.

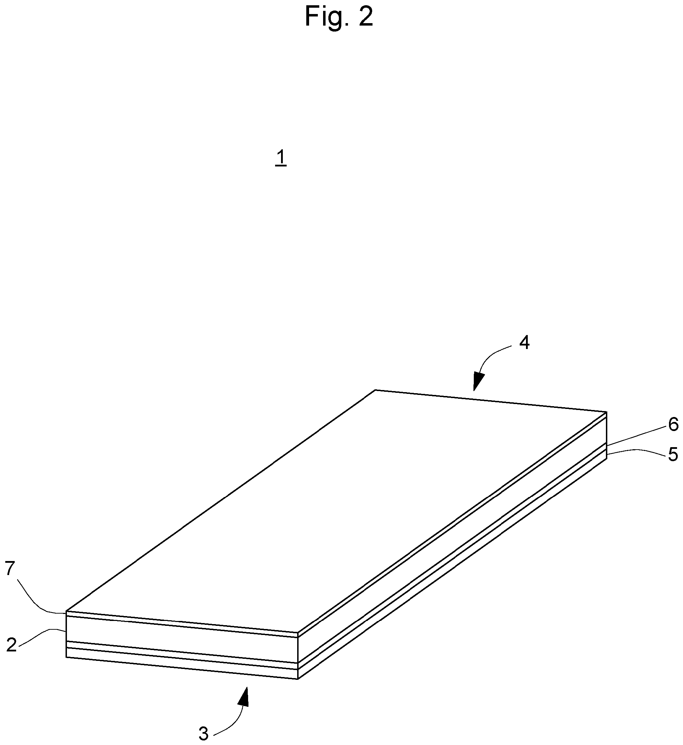

In der **Figur** 2 ist eine perspektivische Darstellung einer weiteren Profilanordnung 1 dargestellt.

Die Profilanordnung 1, insbesondere Kantenleiste, mit wenigstens einem Leistenkern 2 aus wenigstens einem halogenfreien, polymeren Material, wobei der Leistenkern 2 eine Vorderseite 3, sowie eine dieser gegenüberliegend angeordnete, Rückseite 4 aufweist, wobei
∘ das halogenfreie, polymere Material des Leistenkernes 2 wenigstens 15 bis 80 Gew.-%, bevorzugt 20 bis Gew.-%, besonders bevorzugt 25 bis 70 Gew.-%, bezogen auf das Gesamtgewicht, cellulosische Fasern und/oder Zellstoff aufweist,
∘ mit einer durchschnittlichen Partikellänge von etwa 5 bis 1.500 µm, bevorzugt 7 bis 1.000 µm, besonders bevorzugt 150 bis 500 µm nach ISO 13320:2020-01,
dass die cellulosischen Fasern und/oder der Zellstoff im polymeren Material des Leistenkerns 2 deligniert sind/ist.

Weiter ist die Profilanordnung 1 so ausgebildet, dass die cellulosischen Fasern und/oder der Zellstoff im polymeren Material des Leistenkerns 2 maximal 4 Gew.-%, bevorzugt maximal 4 Gew.-%, besonders bevorzugt maximal 3,5 Gew.-%, bezogen auf das Gesamtgewicht, an Lignin aufweisen. In diesem Ausführungsbeispiel ist die Profilanordnung 1 so ausgebildet, dass die cellulosischen Fasern und/oder der Zellstoff im polymeren Material des Leistenkerns maximal 1 Gew.-%, bezogen auf das Gesamtgewicht, an Lignin aufweisen.

In diesem Ausführungsbeispiel weist das halogenfreie, polymere Material des Leistenkerns 2 etwa 25 Gew.-%, bezogen auf das Gesamtgewicht, cellulosische Fasern auf, mit einer durchschnittlichen Partikelgröße von etwa 250 µm nach ISO 13320:2020-0.

Die Profilanordnung 1 ist weiter so ausgebildet, dass das halogenfreie, polymere Material des Leistenkernes 2 eine Farbechtheitszahl von wenigstens 3, bevorzugt wenigstens 3 bis 4 gemäß DIN EN 20105-A02:1994 aufweist.

Das halogenfreie, polymere Material des Leistenkernes 2 weist nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von etwa 3,3 gemäß DIN EN 20105-A02:1994 auf.

Die Profilanordnung 1 ist weiterhin so ausgebildet, dass das halogenfreie, polymere Material des Leistenkernes 2 CIELAB- Farbabstände von wenigstens 3 (drei), bevorzugt wenigstens 3,4 gemäß DIN EN 20105-A02:1994 aufweist. In diesem Ausführungsbeispiel ist die Profianordnung so ausgebildet, dass das halogenfreie, polymere Material des Leistenkernes 2 CIELAB- Farbabstände von etwa 3,2 gemäß DIN EN 20105-A02:1994 aufweist.

Weiter vorteilhaft bei Profilanordnung 1 ist, dass I der Leistenkern 2 ein Isotopenanteil von 14 C/12 C gemäß ASTM 6866-22 Methode B von etwa 0,01 % bis etwa 100 %, vorzugsweise 20 % bis etwa 100 %, besonders bevorzugt 40 bis 100 % aufweist.

In diesem Ausführungsbeispiel weist I der Leistenkern 2 ein Isotopenverhältnis von 14 C/12 C und/oder 13 C/12 C gemäß ASTM 6866-22 Methode B von etwa 50 % auf.

Weiter vorteilhaft bei der Profilanordnung 1 ist, dass das halogenfreie, polymere Material des Leistenkerns 2 mit den cellulosischen Fasern und/oder dem Zellstoff nachwachsende Rohstoffe von etwa 0,01 bis 100 %, vorzugsweise 20 bis 100 %, besonders bevorzugt von 40 bis 100 % aufweist, nachgewiesen gemäß Massenbilanzierung bspw. über ISCC. Bspw. kann die Profilanordnung 1, das halogenfreie, polymere Material des Leistenkerns 2 mit den cellulosischen Fasern und/oder dem Zellstoff, über Massenbilanzierung zertifizierte, nachwachsende Rohstoffe von etwa 50 % sowie etwa 50 % nichtnachwachsende, fossilbasierende Rohstoffe aufweisen.

Die Profilanordnung 1 zeichnet sich weiterhin dadurch aus, dass das halogenfreie, polymere Material des Leistenkerns 2 eine Zugfestigkeit von wenigstens 35 MPa, bevorzugt wenigstens 40 MPa nach DIN EN ISO 527:2019-12 aufweist. In diesem Ausführungsbeispiel weist das halogenfreie, polymere Material des Leistenkerns 2 eine Zugfestigkeit von etwa 38 MPa gemäß DIN EN ISO 527:2019-12 auf.

Weiterhin vorteilhaft bei der Profilanordnung 1 ist, dass das halogenfreie, polymere Material des Leistenkerns 2 mit den cellulosischen Fasern und/oder dem Zellstoff auch nach mehrfachen Recyclingprozessen eine Zugfestigkeit von wenigstens 85 % nach DIN EN ISO 527:2019-12 des unrecycelten, halogenfreien, polymeren Materials aufweist.

In diesem Ausführungsbeispiel weist das halogenfreie, polymere Material des Leistenkerns 2 mit den cellulosischen Fasern und/oder dem Zellstoff auch nach fünffachem Recyclingprozessen eine Zugfestigkeit von wenigstens 90 %, also etwa 34 MPa, nach DIN EN ISO 527:2019-12 des unrecycelten, halogenfreien, polymeren Materials auf.

Die Profilanordnung 1 ist in diesem Ausführungsbeispiel so ausgebildet, dass die Vorderseite 3 des Leistenkerns 2 wenigstens abschnittsweise eine Beschichtung 6 aufweist. Weiterhin ist die Profilanordnung so ausgebildet, dass die Beschichtung 6 an der Vorderseite 3 des Leistenkerns 2 als koextrudierte oder postkoextrudierte Schicht oder als Farbauftrag oder als Druckschicht ausgebildet ist.

Die Beschichtung 6 an der Vorderseite 3 des Leistenkerns 2 der Profilanordnung 1 ist im Wesentlichen einfarbig ausgebildet. In diesem Ausführungsbeispiel ist die Beschichtung 6 an der Vorderseite 3 des Leistenkerns 2 der Profilanordnung 1 als Farbauftrag in der Farbe Weiß ausgebildet.

Die Beschichtung 6 an der Vorderseite 3 des Leistenkerns 2 weist eine Dicke von etwa 1 bis 350 µm, bevorzugt 2 bis 300 µm, besonders bevorzugt 5 bis 250 µm auf.

In diesem Ausführungsbeispiel ist die Dicke der Beschichtung 6 etwa 25 µm.

Die Profilanordnung 1 ist weiterhin so ausgebildet, dass an der Beschichtung 6 an der Vorderseite 3 des Leistenkerns 2 wenigstens eine Deckschicht 5 mit einer Dicke von etwa 2 bis 60 µm, vorzugsweise 5 bis 30 µm angeordnet ist.

In diesem Ausführungsbeispiel ist die Dicke der Deckschicht 5 etwa 10 µm.

Die Profilanordnung 1 ist weiter so ausgebildet, dass die Rückseite 4 des Leistenkerns 2 wenigstens abschnittsweise eine Funktionsschicht 7 aufweist.

Die Funktionsschicht 7 der Profilanordnung 1 ist in diesem Ausführungsbeispiel als Haftvermittlerschicht ausgebildet. Das halogenfreie, polymere Material der Funktionsschicht 7 ist ausgewählt aus der Gruppe der Polyurethane (PUR).

Die Profilanordnung 1 ist somit äußerst vielseitig anwendbar bzw. anbringbar an verschiedenste Gegenstände wie Möbelplatten, Möbelstücke, Spanplatten, Türen, Arbeitsplatten und dergleichen und kann neben der Funktion des Schutzes einer Schmalseite einer beispielsweise Möbelplatte auch optische bzw. haptische Aspekte realisieren, indem beispielsweise die Arbeitsplatten eine Profilanordnung 1 aufweisen, die einen optisch ansprechenden, haptisch fühlbaren Struktureffekt aufweist, der in dieser Form bisher noch nicht realisierbar war und der insbesondere bei einer an ihren Längsrandkanten bearbeiteten/abgefrästen Profilanordnung die Optik der gesamten Platte noch einmal wesentlich verbessert bzw. optimiert.

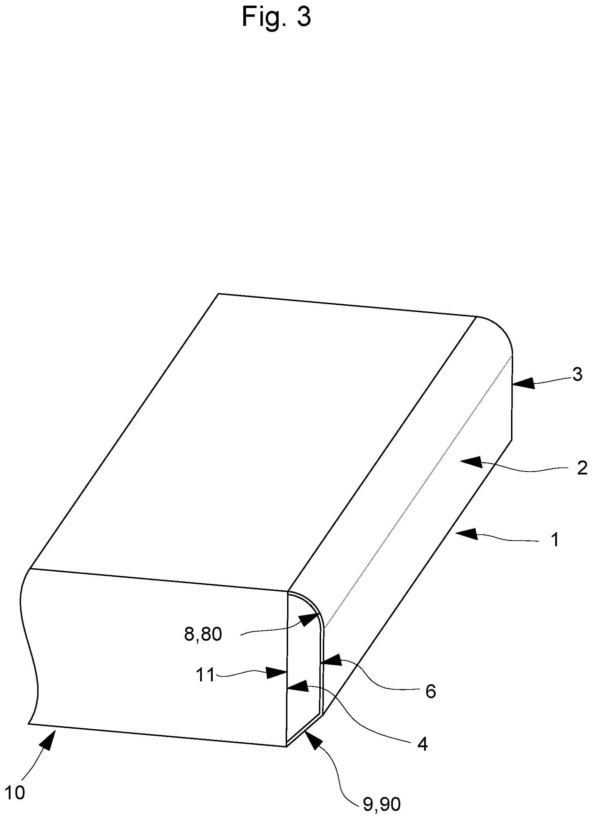

In der **Figur** 3 ist eine perspektivische Darstellung eines Gegenstandes, wie Möbelplatte 10 mit wenigstens einer weiteren Profilanordnung 1 dargestellt.

Die Profilanordnung 1, insbesondere Kantenleiste, mit wenigstens einem Leistenkern 2 aus wenigstens einem halogenfreien, polymeren Material, wobei der Leistenkern 2 eine Vorderseite 3, sowie eine dieser gegenüberliegend angeordnete, Rückseite 4 aufweist, wobei
∘ das halogenfreie, polymere Material des Leistenkernes 2 wenigstens 15 bis 80 Gew.-%, bevorzugt 20 bis 75 Gew.-%, besonders bevorzugt 25 bis 70 Gew.-%, bezogen auf das Gesamtgewicht, cellulosische Fasern und/oder Zellstoff aufweist,
∘ mit einer durchschnittlichen Partikelgröße von etwa 5 bis 1.500 µm, bevorzugt 7 bis 1.000 µm, besonders bevorzugt 150 bis 500 µm nach ISO 13320:2020-01,
dass die cellulosischen Fasern und/oder der Zellstoff im halogenfreien, polymeren Material des Leistenkerns 2 deligniert sind/ist.

Weiter ist die Profilanordnung 1 so ausgebildet, dass die cellulosischen Fasern und/oder der Zellstoff im polymeren Material des Leistenkerns 2 maximal 4 Gew.-%, bevorzugt maximal 4 Gew.-%, besonders bevorzugt maximal 3,5 Gew.-%, bezogen auf das Gesamtgewicht, an Lignin aufweisen. In diesem Ausführungsbeispiel ist die Profilanordnung 1 so ausgebildet, dass die cellulosischen Fasern und/oder der Zellstoff im polymeren Material des Leistenkerns maximal 2,5 Gew.-%, bezogen auf das Gesamtgewicht, an Lignin aufweisen.

In diesem Ausführungsbeispiel weist das halogenfreie, polymere Material des Leistenkerns 2 etwa 40 Gew.-%, bezogen auf das Gesamtgewicht, cellulosische Fasern auf, mit einer durchschnittlichen Partikelgröße von etwa 350 µm nach ISO 13320:2020-0.

Die Profilanordnung 1 ist weiter so ausgebildet, dass das halogenfreie, polymere Material des Leistenkernes 2 nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von wenigstens 3 (drei), bevorzugt wenigstens 3 (drei) bis 4 (vier) gemäß DIN EN 20105-A02:1994 aufweist.

Das halogenfreie, polymere Material des Leistenkernes 2 weist nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von etwa 3,4 gemäß DIN EN 20105-A02:1994 auf.

Die Profilanordnung 1 ist weiterhin so ausgebildet, dass das halogenfreie, polymere Material des Leistenkernes 2 CIELAB- Farbabstände von wenigstens 3 (drei), bevorzugt wenigstens 3,4 gemäß DIN EN 20105-A02:1994 aufweist. In diesem Ausführungsbeispiel ist die Profianordnung so ausgebildet, dass das halogenfreie, polymere Material des Leistenkernes 2 CIELAB- Farbabstände von etwa 3,2 gemäß DIN EN 20105-A02:1994 aufweist.

Ebenfalls vorteilhaft bei der Profilanordnung 1 ist, dass der Leistenkern 2 einen Isotopenanteil 14 C von 0,01 % bis 100 %, vorzugsweise 20 % bis 100 %, besonders bevorzugt 40 bis 100 % aufweist. In diesem Ausführungsbeispiel weist der Leistenkern 2 einen Isotopenanteil 14 C von etwa 50 % auf.

Weiter vorteilhaft bei der Profilanordnung 1 ist, dass das halogenfreie, polymere Material des Leistenkerns 2 mit den cellulosischen Fasern und/oder dem Zellstoff nachwachsende Rohstoffe von etwa 0,01 bis 100 %, vorzugsweise 20 bis 100 %, besonders bevorzugt von 40 bis 100 % aufweist, nachgewiesen gemäß Massenbilanzierung bspw. über ISCC.

Bspw. kann die Profilanordnung 1, das halogenfreie, polymere Material des Leistenkerns 2 mit den cellulosischen Fasern und/oder dem Zellstoff, über Massenbilanzierung zertifizierte, nachwachsende Rohstoffe von etwa 100 % aufweist.

Ebenfalls vorteilhaft bei der Profilanordnung 1 ist, dass der Werkstoff des Leistenkerns 2 etwa 5 bis 50 Gew.-%, bevorzugt etwa 10 bis 45 Gew.-%, besonders bevorzugt 15 bis 35 Gew.-%, bezogen auf sein Gesamtgewicht, wenigstens einen Füllstoff aufweist, wobei der Füllstoff ausgewählt ist insbesondere aus Silikaten, Karbonaten, Phosphaten, Sulfaten, Sulfiden und dergleichen. Weiter vorteilhaft ist der Füllstoff ausgewählt aus der Gruppe der Schichtsilikate, sowie Carbonate bzw. Sulfate von Barium sowie Kalzium, und dergleichen. Die Füllstoffe können dabei vorteilhafterweise nachwachsende Rohstoffe von etwa 0,01 bis 100 %, vorzugsweise 20 bis 100 %, besonders bevorzugt von 40 bis 100 % aufweisen.

In diesem Ausführungsbeispiel weist der Werkstoff des Leistenkerns 2 etwa 35 Gew.-%, bezogen auf sein Gesamtgewicht, einen Füllstoff auf ausgewählt aus der Gruppe der Carbonate von Kalzium, nämlich Kalziumcarbonat.

Die Profilanordnung 1 ist in diesem Ausführungsbeispiel weiter so ausgebildet, dass die Vorderseite 3 des Leistenkerns 2 wenigstens abschnittsweise eine Beschichtung 6 aufweist. Weiterhin ist die Profilanordnung so ausgebildet, dass die Beschichtung 6 an der Vorderseite 3 des Leistenkerns 2 als koextrudierte oder postkoextrudierte Schicht oder als Farbauftrag oder als Druckschicht ausgebildet ist.

Die Beschichtung 6 an der Vorderseite 3 des Leistenkerns 2 der Profilanordnung 1 ist im Wesentlichen einfarbig ausgebildet.

In diesem Ausführungsbeispiel ist die Beschichtung 6 an der Vorderseite 3 des Leistenkerns 2 der Profilanordnung 1 als koextrudierte Schicht in der Farbe Braun ausgebildet. Die Beschichtung 6 an der Vorderseite 3 des Leistenkerns 2 weist eine Dicke von etwa 1 bis 350 µm, bevorzugt 2 bis 300 µm, besonders bevorzugt 5 bis 250 µm auf.

In diesem Ausführungsbeispiel ist die Dicke der Beschichtung 6 etwa 15 µm.

Der Gegenstand wie Möbelplatte 10 zeichnet sich dadurch aus, dass die Profilanordnung 1 an wenigstens einer Stirnseite 11 der Möbelplatte 10 angebracht, insbesondere fixiert, ist. In diesem Ausführungsbeispiel ist der Gegenstand wie Möbelplatte 10 so ausgebildet, dass die Profilanordnung 1 ohne eine zusätzliche Funktionsschicht, insbesondere Haftvermittlerschicht, mit der Stirnseite 11 der Möbelplatte 10 stoffschlüssig verbunden, insbesondere fixiert ist.

Der Gegenstand wie Möbelplatte 10 ist vorteilhafterweise so ausgebildet, dass die, an der Stirnseite 11 der Möbelplatte 10 angebrachte, Profilanordnung 1 an wenigstens einer ihrer, in Profillängsrichtung L angeordneten, Stirnseite 8,9 wenigstens eine Fase 80 und/oder wenigstens einen Radius 90 aufweist.

## Patentansprüche

1. Profilanordnung (1), insbesondere Kantenleiste, mit wenigstens einem Leistenkern (2) aus wenigstens einem halogenfreien, polymeren Material, wobei der Leistenkern (2) eine Vorderseite (3), sowie eine dieser gegenüberliegend angeordnete, Rückseite (4) aufweist, wobei
∘ das halogenfreie, polymere Material des Leistenkernes (2) wenigstens 15 bis 80 Gew.-%, bevorzugt 20 bis 75 Gew.-%, besonders bevorzugt 25 bis 70 Gew.-%, bezogen auf das Gesamtgewicht, cellulosische Fasern und/oder Zellstoff aufweist,
∘ mit einer durchschnittlichen Partikellänge von etwa 5 bis 1500 µm, bevorzugt 7 bis 1.000 µm, besonders bevorzugt 10 bis 500 µm nach ISO 13320:2020-01.
∘ dass die cellulosischen Fasern und/oder der Zellstoff im halogenfreien, polymeren Material des Leistenkerns (2) deligniert sind/ ist.

2. Profilanordnung (1) nach Anspruch 1, **dadurch gekennzeichnet, dass** die cellulosischen Fasern und/oder der Zellstoff im halogenfreien, polymeren Material des Leistenkerns (2) vorzugsweise maximal 5 Gew.-%, bevorzugt maximal 4 Gew.-%, besonders bevorzugt maximal 3,5 Gew.-%, bezogen auf das Gesamtgewicht, an Lignin aufweisen.

3. Profilanordnung (1) nach einem der vorhergehenden Ansprüche, **dadurch gekennzeichnet, dass** das halogenfreie, polymere Material des Leistenkernes (2) nach Lichtechtheit gemäß DIN EN ISO 4892-2:2021-11, Verfahren B, Zyklus B2, Blaumaßstab Stufe 6 gemäß EN ISO 105_B02:1999, 4.1.1. eine Farbechtheitszahl nach Graumaßstab von wenigstens 3 (drei), bevorzugt wenigstens 3 (drei) bis 4 (vier) gemäß DIN EN 20105-A02:1994 aufweist.

4. Profilanordnung (1) nach einem der vorhergehenden Ansprüche, **dadurch gekennzeichnet, dass** die cellulosischen Fasern und/oder der Zellstoff in räumlich gleichmäßiger, homogener und/ oder inhomogener Verteilung in dem halogenfreien, polymeren Material des Leistenkerns (2) enthalten sind.

5. Profilanordnung (1) nach einem der vorhergehenden Ansprüche, **dadurch gekennzeichnet, dass** der Kohlenstoff- Anteil des Leistenkerns (2) wenigstens teilweise Isotopenanteile von 14 C/12 C von etwa 0,01 bis 100 %, vorzugsweise 20 bis 100 %, besonders bevorzugt von 40 bis 100 % gemäß ASTM 6866-22 Methode B aufweist.

6. Profilanordnung (1) nach einem der vorhergehenden Ansprüche, **dadurch gekennzeichnet, dass** das halogenfreie, polymere Material des Leistenkerns (2) nachwachsende Rohstoffe von etwa 0,01 bis 100 %, vorzugsweise 20 bis 100 %, besonders bevorzugt von 40 bis 100 % aufweist, nachgewiesen gemäß Massenbilanzierung bspw. über ISCC.

7. Profilanordnung (1) nach einem der vorhergehenden Ansprüche, **dadurch gekennzeichnet, dass** die Vorderseite (3) des Leistenkerns (2) wenigstens abschnittsweise eine Beschichtung (6) aufweist.

8. Profilanordnung (1) nach einem der vorhergehenden Ansprüche, **dadurch gekennzeichnet, dass** die Beschichtung (6) an der Vorderseite (3) des Leistenkerns (2) eine Dicke von etwa 1 bis 350 µm, bevorzugt 2 bis 300 µm, besonders bevorzugt 5 bis 250 µm aufweist.

9. Profilanordnung (1) nach einem der vorhergehenden Ansprüche, **dadurch gekennzeichnet, dass** die Beschichtung (6) an der Vorderseite (3) des Leistenkerns (2) als koextrudierte oder postkoextrudierte Schicht oder als Farbauftrag oder als Druckschicht ausgebildet ist.

10. Profilanordnung (1) nach einem der vorhergehenden Ansprüche, **dadurch gekennzeichnet, dass** die Rückseite (4) des Leistenkerns (2) wenigstens abschnittsweise eine Funktionsschicht (7) aufweist.

11. Profilanordnung (1) nach einem der vorhergehenden Ansprüche, **dadurch gekennzeichnet, dass** an der Vorderseite (3) des Leistenkörpers (2) und/oder an der Beschichtung (6) wenigstens teilweise eine Deckschicht (5) mit einer Dicke von etwa 2 bis 60 µm, vorzugsweise 5 bis 30 µm angeordnet ist.

12. Gegenstand wie Möbelplatte, Möbelstück, Spanplatte, Tür, Arbeitsplatte und dergleichen mit wenigstens einer Profilanordnung (1) nach zumindest einem der vorangegangenen Ansprüche.

13. Gegenstand wie Möbelplatte, Möbelstück, Spanplatte, Tür, Arbeitsplatte und dergleichen nach Anspruch 12, wobei die Profilanordnung (1) mit einer der Vorderseite (3) abgewandten Rückseite (4) an dem Gegenstand angeordnet ist.
